# EUROPÄISCHE PATENTSCHRIFT

(11) **EP 1 703 350 B1**
(45) Veröffentlichungstag und Bekanntmachung des Hinweises auf die Patenterteilung: **08.05.2019**
(21) Anmeldenummer: 05005903.9
(22) Anmeldetag: 17.03.2005
(51) Int. Cl.: G05B 23/02

(54) **Diagnose eines Automatisierungssystems**
Diagnostics of an automation system
Diagnostic d'un système d'automatisation

(43) Veröffentlichungstag der Anmeldung: 20.09.2006
(73) Patentinhaber: Siemens Aktiengesellschaft, 80333 München (DE)
(72) Erfinder: Beck, Hans-Joachim, 76287 Rheinstetten (DE); Becker, Norbert, 91058 Erlangen (DE); Helmig, Dieter, 90475 Nürnberg (DE); Ritzer, Josef, 76149 Karlsruhe (DE); Schlemper, Michael, 91056 Erlangen (DE); Schmuck, Axel, 76149 Karlsruhe (DE); Weigel, Stefan, 90562 Röckenhof (DE)

(56) Entgegenhaltungen:
- EP-A- 0 413 512
- EP-A- 0 482 523
- US-A- 5 528 752
- US-A- 5 914 875

## Beschreibung

Die Erfindung betrifft ein Verfahren, ein Computerprogrammprodukt und ein System zur Diagnose eines aus Automatisierungskomponenten aufgebauten Automatisierungssystems.

Bei der Bedienung und Überwachung von automatisierten Produktionseinrichtungen ist es erforderlich, Zustandsinformationen der Automatisierungseinrichtungen und der Produktion stets aktuell zu halten und auf Änderungen schnell zu reagieren. Dafür müssen alle Ereignisse und Fehler aus den Automatisierungseinrichtungen und aus dem Prozess erfasst, bewertet, kommuniziert und signalisiert werden. Die Art der Erfassung und Bewertung, auszulösende Reaktionen auf Ereignisse und die Auswahl der Zielgeräte, auf denen die Ereignisse oder Resultate, deren Verarbeitung angezeigt oder gespeichert werden sollen, müssen bereits in der Engineeringphase festgelegt werden.

Bekannte Methoden und Applikationen zur System- und Prozessdiagnose basieren auf spezifischen Verfahren und/oder spezifischen Werkzeugen, mit denen ein Projekteur einer Automatisierungseinrichtung durch additive Engineeringschritte die Diagnoseanforderungen erfüllt. Zur Erfassung, Aufbereitung und Weiterverarbeitung der Diagnoseereignisse werden spezifische Engineeringschritte durchgeführt und/oder zusätzliche Programme erstellt US5914875 beschreibt ein Verfahren und ein System zur Diagnostik einer Anlage.

Der Erfindung liegt die Aufgabe zu Grunde, Diagnoseinformationen für ein Automatisierungssystem mit möglichst geringem Engineeringaufwand verfügbar zu machen.

Diese Aufgabe wird durch ein Diagnoseverfahren für ein aus zumindest einer ersten und einer zweiten Automatisierungskomponente aufgebautes Automatisierungssystem, in dem die Automatisierungskomponenten in einer physikalischen und/oder funktionalen Beziehung zueinander stehen, gelöst welches die Merkmale des Patentanspruchs 1 aufweist. Erzeugung eines Diagnosemodells, bei dem der ersten Automatisierungskomponente ein erster Modellknoten und der zweiten Automatisierungskomponente ein zweiter Modellknoten zugeordnet werden,
- Erzeugung einer Verknüpfungen zwischen dem ersten und zweiten Modellknoten innerhalb des Diagnosemodells, die die physikalischen und/oder funktionalen Beziehung zwischen der ersten und zweiten Automatisierungskomponente modelliert,
- Erfassung eines ersten Zustandes der ersten Automatisierungskomponente in einer ersten Statusinformation des ersten Modellknotens und eines zweiten Zustandes der zweiten Automatisierungskomponente in einer zweiten Statusinformation des zweiten Modellknotens im Diagnosemodell und
- Auswertung der ersten und/oder zweiten Statusinformation zur Ermittlung einer Zustandsinformation für das Automatisierungssystem,
wobei das Diagnosemodell automatisch bei einer mit einem Engineeringsystem durchgeführten Projektierung des Automatisierungssystems erzeugt wird.

Ferner wird die Aufgabe durch ein Engineeringsystem gelöst zur Projektierung eines Automatisierungssystems mit einer Eingabevorrichtung zur Definition einer physikalischen und/oder funktionalen Beziehung zwischen einer ersten und einer zweiten Automatisierungskomponente und einer ersten Verarbeitungseinheit gemäß den Merkmalen des Patentanspruchs 8.
- Automatischen Erzeugung eines Diagnosemodells während der Projektierung, bei dem der ersten Automatisierungskomponente ein erster Modellknoten und der zweiten Automatisierungskomponente ein zweiter Modellknoten zugeordnet sind,
- Automatischen Erzeugung einer Verknüpfungen zwischen dem ersten und zweiten Modellknoten innerhalb des Diagnosemodells, die die physikalischen und/oder funktionalen Beziehung zwischen der ersten und zweiten Automatisierungskomponente modelliert,
   wobei das Diagnosemodell zur
- Erfassung eines ersten Zustandes der ersten Automatisierungskomponente in einer ersten Statusinformation des ersten Modellknotens und eines zweiten Zustandes der zweiten Automatisierungskomponente in einer zweiten Statusinformation des zweiten Modellknotens im Diagnosemodell und zur
- Auswertung der ersten und/oder zweiten Statusinformation zur Ermittlung einer Zustandsinformation für das Automatisierungssystem.

Bei der Projektierung einer Automatisierungsanwendung generiert ein Projekteur aus verschiedenen Automatisierungskomponenten ein Automatisierungssystem. Bei den Automatisierungskomponenten kann es sich sowohl um Hardware- als auch um Softwarekomponenten handeln. Die einzelnen Komponenten des Automatisierungssystems stehen in einer funktionalen und/oder physikalischen Beziehung zueinander. Die Auswahl der einzelnen Automatisierungskomponenten sowie die Verknüpfung der Automatisierungskomponenten zu einem Gesamtsystem werden von einem Anwender in der Regel mit Hilfe eines Engineeringsystems durchgeführt.

Der Erfindung liegt die Erkenntnis zugrunde, dass bereits in der Engineeringphase das Diagnosemodell, welches die Topologie des entstehenden Automatisierungssystems wiedergibt, automatisch generiert werden kann. Bei der Projektierung mit Hilfe eines Engineeringsystems wählt der Anwender die einzelnen Komponenten des Automatisierungssystems aus Bibliotheken aus, und setzt diese entsprechend der Applikationsanforderung in Beziehung zueinander. Jede Komponente verfügt dabei über eine elektronische Beschreibung, die neben Leistungsdaten wie Herstellerangaben, Funktionsmengengerüst oder Geräteparametern auch insbesondere eine Beschreibung der Ereignisse beinhalten kann, die diese Komponente erfassen, generieren und kommunizieren kann. U.a. ist hierunter auch eine Liste der möglichen Fehler zu verstehen, die diese Komponente kennt bzw. verursachen kann. Die so erstellte Topologie des Automatisierungssystems kann automatisch in ein entsprechendes Diagnosemodell umgesetzt werden. Innerhalb des Diagnosemodells werden die einzelnen Automatisierungskomponenten durch Modellknoten repräsentiert. Zwischen den Modellknoten werden Verknüpfungen erzeugt, die die logischen, physikalischen oder funktionalen Beziehungen der entsprechenden Automatisierungskomponenten widerspiegeln.

Jedem Modellknoten ist eine Statusinformation zugeordnet, die den Zustand der zugehörigen Automatisierungskomponente beschreibt. Anhand der Statusinformationen der Modellknoten kann schließlich eine Zustandsinformation generiert werden, die Aufschluss über den Gesamtzustand des Automatisierungssystems gibt.

Durch das erfindungsgemäße Verfahren wird automatisch schon während der Projektierungsphase ein Diagnosemodell generiert, welches die topologische Gestalt des Automatisierungssystems wiedergibt. Die Modellknoten des Diagnosemodells entsprechen den Automatisierungskomponenten des Automatisierungssystems und die Verknüpfungen zwischen dem Modellknoten den physikalischen, funktionalen oder logischen Beziehungen der einzelnen Automatisierungskomponenten untereinander. Somit wird durch das erfindungsgemäße Verfahren ohne zusätzlichen Engineeringaufwand eine topologische Sicht des gesamten Automatisierungssystems geschaffen, anhand derer eine Diagnose des Gesamtsystems sehr einfach durchgeführt werden kann. Schon bei der Projektierung des Automatisierungssystems verwendete Informationen bezüglich der einzelnen Komponenten und deren applikationsspezifischen Beziehungen untereinander werden direkt in ein applikationsspezifisches Diagnosemodell umgesetzt, ohne dass der Anwender hierzu zusätzliche Engineeringschritte durchführen muss.

Fehlerhafte Komponenten können innerhalb des gesamten Automatisierungssystems sehr leicht selektiert werden. Zusatzdienste, wie z.B. Suchfunktionen, Filter oder eine Fehlerstatistik, sind über das Diagnosemodell sehr einfach realisierbar. Detektierte Fehler können zur Erzeugung entsprechender Alarmmeldungen verwendet werden. Weiterhin kann der Anwender anhand des Diagnosemodells jederzeit den aktuellen Gesamtzustand des Automatisierungssystems abfragen und anzeigen lassen.

In einer vorteilhaften Ausführungsform der Erfindung umfassen der erste und/oder zweite Modellknoten eine elektronische Beschreibung der zugehörigen Automatisierungskomponente, wobei die elektronische Beschreibung, insbesondere eine Beschreibung möglicher Fehler der zugehörigen Automatisierungskomponente umfasst. Derartige elektronische Beschreibungen liegen in der Regel schon in einem Engineeringsystem vor, welches ein Anwender zur Projektierung des Automatisierungssystems verwendet.

Das Diagnosemodell spiegelt den Aufbau des Automatisierungssystems vorteilhafter Weise eins zu eins wieder. Innerhalb des Automatisierungssystems sind die einzelnen Automatisierungskomponenten oft in einer hierarchischen Ordnung zueinander angebracht. Beispielsweise steuert ein Busmaster mehrere I/O-Module an, so dass der Busmaster in der hierarchischen Ordnung über den I/O-Modulen angeordnet ist. Eine derartige Anordnung findet sich auch im Diagnosemodell wieder. Die hierarchische Ordnung zwischen den Automatisierungskomponenten wird hierbei über die Verknüpfung zwischen den entsprechenden Modellknoten modelliert. Somit besteht auch zwischen den verschiedenen Modellknoten des Diagnosemodells eine hierarchische Ordnung. Hierbei kann es vorteilhaft sein, wenn die zweite Statusinformation über die Verknüpfung von dem ersten Modellknoten eingelesen wird. Der erste Modellknoten ist in einem solchen Fall dem zweiten Modellknoten, der die zweite Statusinformation aufweist, hierarchisch übergeordnet. Der erste Modellknoten überprüft durch Einlesen der zweiten Statusinformation den Zustand des zweiten Modellknotens bzw. der zweiten Automatisierungskomponente, die dem zweiten Modellknoten zugeordnet ist.

Insbesondere bei einer derartigen hierarchischen Ordnung zwischen dem ersten und dem zweiten Modellknoten ist es vorteilhaft, wenn innerhalb des ersten Modellknotens eine Filterfunktion implementiert wird, mit der in Abhängigkeit der ersten und/oder zweiten Statusinformation eine Alarmmeldung generiert wird. Da der erste Modellknoten dem zweiten hierarchisch übergeordnet ist, überprüft er sowohl die eigene Statusinformation als auch die zweite Statusinformation des zweiten Modellknotens und entscheidet, ob eine dieser Statusinformationen Anlass zur Generierung einer Alarmmeldung gibt. Hierzu verwendet der erste Modellknoten die Filterfunktion.

In einer vorteilhaften Ausführungsform der Erfindung kann das Diagnosemodell zur Ermittlung einer fehlerhaften Komponente innerhalb des Automatisierungssystems verwendet werden. Dies ist dadurch besonders einfach durchzuführen, dass die erste Statusinformation zur Anzeige einer Störung verwendet wird, wenn die zweite Statusinformation eine Störung anzeigt, sofern die erste Automatisierungskomponente der zweiten Automatisierungskomponente funktional übergeordnet ist. Eine derartige funktionale Ordnung wäre zum Beispiel bei einer Master-Slave Beziehung gegeben oder bei einer Ansteuerung eines I/O Moduls durch eine CPU. Hierbei ist es zweckmäßig, dass die erste Statusinformation auch dann eine Störung anzeigt, wenn die zweite Automatisierungskomponente eine Störung aufweist, die erste Automatisierungskomponente selbst jedoch störungsfrei arbeitet. Bei einer Alarmmeldung wird dann zweckmäßigerweise zunächst zur Auffindung einer Störungsursache die erste Statusinformation überprüft und nur im Falle einer Störungsanzeige der ersten Statusinformation die zweite Statusinformation überprüft.

Bei einer vorteilhaften Ausführung des Diagnoseverfahrens wird das Diagnosemodell auf die erste und/oder die zweite Automatisierungskomponente geladen und zur Laufzeit des Automatisierungssystems aktiviert. Vorteilhafterweise wird eine "intelligente" Automatisierungskomponente wie z. B. eine CPU zur Aktivierung des Diagnosemodells verwendet.

Im Folgenden wird die Erfindung anhand der in den Figuren dargestellter Ausführungsbeispiele näher beschrieben und erläutert. Es zeigen:
- FIG 1: eine schematische Darstellung eines aus einer ersten und einer zweiten Automatisierungskomponente aufgebauten Automatisierungssystems und eines zugehörigen Diagnosemodells,
- FIG 2: eine schematische Darstellung eines Engineeringsystems zur Projektierung eines Automatisierungssystems und Generierung eines zugehörigen Diagnosemodells und
- FIG 3: eine Indizierung einer von einer Automatisierungskomponente verursachten Störung innerhalb eines Diagnosemodells.

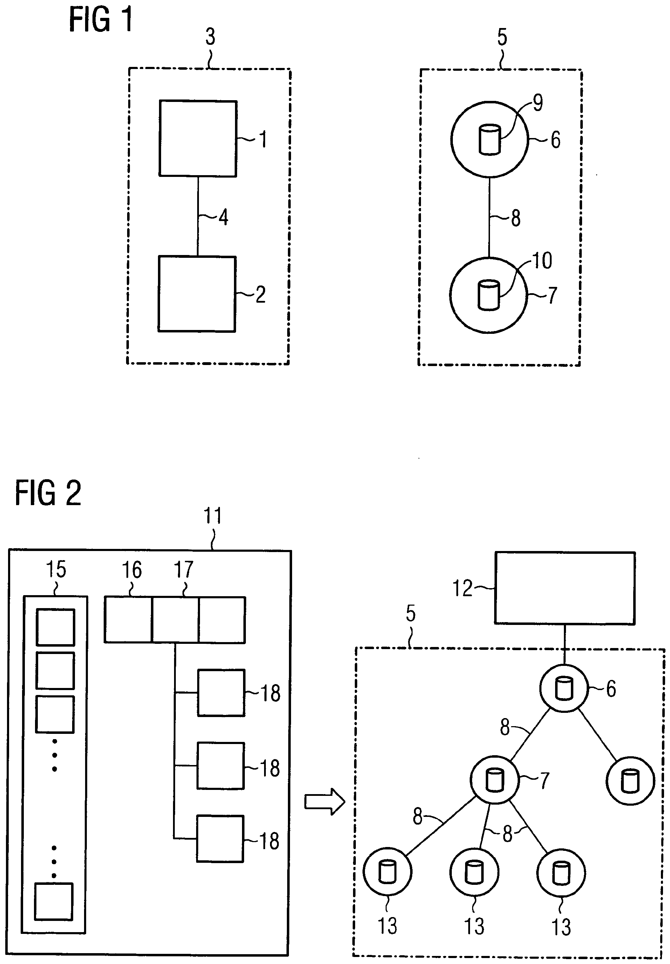

FIG 1 zeigt eine schematische Darstellung eines aus einer ersten und einer zweiten Automatisierungskomponente 1,2 aufgebauten Automatisierungssystems 3 und eines zugehörigen Diagnosemodells 5. Innerhalb des Automatisierungssystems 3 stehen die Automatisierungskomponenten 1,2 in einer physikalischen und/oder funktionalen Beziehung 4 zueinander. Beispielsweise handelt es sich bei der zweiten Automatisierungskomponente 2 um ein I/O-Modul, welches von der ersten Automatisierungskomponente 1, die beispielsweise als CPU ausgeführt ist, angesteuert wird.

Zur Projektierung des Automatisierungssystems 3 wählt ein Anwender eines Engineeringsystems aus einer Bibliothek die CPU 1 und das I/O-Modul 2 und erstellt die physikalische bzw. funktionale Beziehung zwischen diesen beiden Komponenten 4. Bei diesem Projektierungsvorgang wird automatisch das Diagnosemodell 5 erstellt, in dem die CPU 1 durch einen ersten Modellknoten 6 und das I/O-Modul 2 durch einen zweiten Modellknoten 7 repräsentiert wird. Das Diagnosemodell 5 enthält elektronische Beschreibungen, die der ersten und zweiten Automatisierungskomponente 1,2 zugeordnet sind. Darüber hinaus ist jedem Modellknoten 6,7 eine Statusinformation 9,10 zugeordnet. Der erste Modellknoten 6 enthält eine erste Statusinformation 9, die Informationen über den aktuellen Status der ersten Automatisierungskomponente 1 enthält. Die zweite Statusinformation 2 des zweiten Modellknotens 7 enthält Informationen über den Zustand der zweiten Automatisierungskomponente 2. Die physikalische bzw. funktionale Beziehung zwischen der ersten und der zweiten Automatisierungskomponente 1,2 wird in dem Diagnosemodell 5 durch eine Verknüpfung 8 modelliert.

Das entstehende Diagnosemodell 5 kann anschließend z.B. auf die erste oder die zweite Automatisierungskomponente 1,2 geladen werden und zur Laufzeit ausgeführt werden. Da es sich bei der zweiten Automatisierungskomponente um ein I/O-Modul handelt, welches in der Regel keine Intelligenz zur Ausführung eines derartigen Diagnoseverfahrens aufweist, bietet es sich in dem hier dargestellten Fall an, das Diagnosemodell auf die erste, als CPU ausgeführte Automatisierungskomponente 1 zu laden und dort zur Laufzeit auszuführen. Tritt nun zur Laufzeit eine Störung des I/O-Moduls 2 auf, so wird in dem Diagnosemodell 5 die zweite Statusinformation 10 zur Anzeige dieser Störung verwendet. Diese Störung kann beispielsweise innerhalb des Diagnosemodells 5 von dem ersten Modellknoten 6 ausgelesen werden. Je nach Signifikanz der Störung kann schließlich auch die erste Statusinformation 9 innerhalb des ersten Modellknotens 6 zur Anzeige einer Störung verwendet werden. Weiterhin kann der erste Modellknoten 6 zur Generierung einer Alarmmeldung verwendet werden, die einen gestörten Zustand des Automatisierungssystems 3 meldet.

FIG 2 zeigt eine schematische Darstellung eines Engineeringsystems 11 zur Projektierung eines Automatisierungssystems und Generierung eines zugehörigen Diagnosemodells. Innerhalb des Engineeringsystems 11 hat ein Anwender die Möglichkeit, verschiedene Komponenten eines Automatisierungssystems aus einer Bibliothek 15 auszuwählen und auf einer Benutzeroberfläche in eine Beziehung zueinander zu setzen. Beispielsweise wählt der Anwender aus der Bibliothek 15 eine Steuerung 16 und einen Busmaster 17, über den drei I/O-Module 18 angesteuert werden.

Während der dargestellten Projektierung mit Hilfe des Engineeringsystems 11 wird automatisch ein Diagnosemodell 5 des geplanten Automatisierungssystems generiert, in dem die gewählten Automatisierungskomponenten durch entsprechende Modellknoten repräsentiert werden. So wird die Steuerung 16 durch einen ersten Modellknoten 6 modelliert und der Busmaster 17 durch einen zweiten Modellknoten 7. Die I/O-Module 18 werden durch drei dritte Modellknoten 13 repräsentiert, die innerhalb des Diagnosemodells dem zweiten Modellknoten 7 in einer Baumstruktur hierarchisch untergeordnet sind. Somit enthält das Diagnosemodell 5 Verknüpfungen 8, die die physikalischen bzw. funktionalen Beziehungen der Automatisierungskomponenten innerhalb des geplanten Automatisierungssystems in Form einer Baumstruktur wiedergeben.

Das Diagnosemodell 5 kann nach der Projektierungsphase auf eine oder mehrere Komponenten des Automatisierungssystems geladen werden und dort zur Laufzeit ausgeführt werden.

Da das Diagnosemodell 5 die topologische Struktur des Automatisierungssystems nahezu vollständig modelliert, kann es sehr vorteilhaft zur Auffindung einer gestörten Komponente innerhalb des Automatisierungssystems angewendet werden.

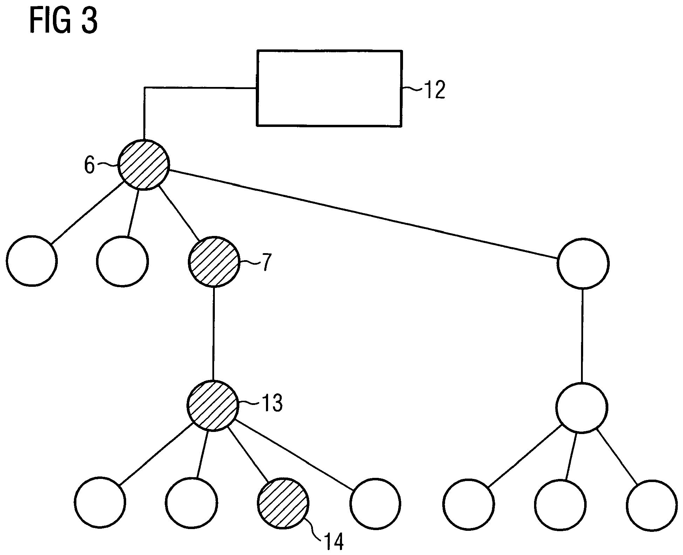

FIG 3 zeigt eine Indizierung einer von einer Automatisierungskomponente verursachten Störung innerhalb eines Diagnosemodells. Die Figur veranschaulicht, inwiefern die topologische Sicht des Diagnosemodells verwendet werden kann, um eine von einer Automatisierungskomponente verursachte Störung gezielt zur Generierung einer Alarmmeldung 12 zu verwenden und die gestörte Komponente innerhalb des Gesamtsystems aufzufinden. Das System weist eine Vielzahl von Modellknoten auf, die entsprechende Automatisierungskomponenten repräsentieren und von denen der Übersicht halber nur ein erster Modellknoten 6, ein zweiter Modellknoten 7, ein dritter Modellknoten 13 und ein vierter Modellknoten 14 bezeichnet sind. Beispielsweise soll es sich bei dem ersten Modellknoten 6 um die Repräsentation einer CPU handeln, die einen Busmaster ansteuert, der durch den zweiten Modellknoten 7 modelliert wird. Der Busmaster ist wiederum mit einer zweiten CPU verbunden, die durch den dritten Modellknoten 13 modelliert wird und als Slave konfiguriert ist. Die zweite CPU steuert wiederum verschiedene I/O-Module an, von denen eins durch den vierten Modellknoten 14 modelliert wird.

Es sei nun der Fall angenommen, dass das I/O-Modul, welches durch den vierten Modellknoten 14 repräsentiert wird, eine Störung aufweist. Eine derartige Störung wird mit Hilfe einer entsprechenden Statusinformation, die Bestandteil des vierten Modellknotens 14 ist, angezeigt. Bei einer Störung, die Probleme innerhalb des Gesamtsystems verursachen könnte, wird nun auch eine dem dritten Modellknoten 13 zugeordnete Statusinformation einen Fehler anzeigen. Dieser Fehler wird schließlich auch von dem zweiten Modellknoten 7, der dem dritten Modellknoten 13 hierarchisch übergeordnet ist, erkannt und angezeigt. Schließlich wird auch die Statusinformation des ersten Modellknotens 6 einen Fehler anzeigen, der in Abhängigkeit der schwere des Fehlers die Generierung einer Alarmmeldung 12 verursacht. Die Alarmmeldung 12 wird beispielsweise auf einem HMI-System des Automatisierungssystems ausgegeben, so dass die Meldung einem Anwender des Automatisierungssystems ersichtlich wird.

Das dargestellte Diagnosemodell kann auch auf sehr vorteilhafte Weise zur Auffindung der gestörten Komponente innerhalb des Automatisierungssystems verwendet werden, die die Alarmmeldung 12 verursacht hat. Hierzu wird der Baum des Diagnosemodells, ausgehend von der obersten Hierarchiestufe nach fehlerhaften Komponenten bzw. nach Modellknoten, die einen Fehler anzeigen, durchforstet. In dem dargestellten System wird festgestellt, dass der erste Modellknoten 6 einen Fehler anzeigt. Anschließend werden die dem ersten Modellknoten 6 hierarchisch untergeordneten Modellknoten auf einen möglichen Fehler hin untersucht und hierbei der zweite Modellknoten 7 ermittelt. Dem zweiten Modellknoten 7 ist lediglich der dritte Modellknoten 13 untergeordnet, dem wiederum vier weitere Modellknoten untergeordnet sind, von denen der vierte Modellknoten 14 die Fehler verursachende Komponente, in diesem Beispiel das I/O-Modul, repräsentiert.

Zusammenfassend betrifft die Erfindung ein Verfahren, ein Computerprogrammprodukt und ein Engineeringsystem zur Erzeugung eines Diagnosemodells für ein aus verschiedenen Automatisierungskomponenten aufgebautes Automatisierungssystem. Das Diagnosemodell wird automatisch während der Projektierungsphase des Automatisierungssystems generiert. Innerhalb des Diagnosemodells werden die Automatisierungskomponenten durch Modelknoten repräsentiert. Funktionale und/oder physikalische Beziehungen zwischen den Automatisierungskomponenten werden durch Verknüpfungen der entsprechenden Modellknoten innerhalb des Diagnosemodells abgebildet. Jeder Modelknoten enthält eine Statusinformation, in der der Status der zugehörigen Automatisierungskomponente abgelegt ist. Durch Auswertung der Statusinformationen kann mit Hilfe des Diagnosemodells der Zustand des Automatisierungssystems untersucht und überwacht werden.

## Patentansprüche

1. Diagnoseverfahren für ein aus zumindest einer ersten und einer zweiten Automatisierungskomponente (1,2) aufgebautes Automatisierungssystem (3), in dem die Automatisierungskomponenten (1,2) in einer physikalischen und/oder funktionalen Beziehung (4) zueinander stehen, mit folgenden Verfahrensschritten:
- Erzeugung eines Diagnosemodells (5), bei dem der ersten Automatisierungskomponente (1) ein erster Modellknoten (6) und der zweiten Automatisierungskomponente (2) ein zweiter Modellknoten (7) zugeordnet werden,
- Erzeugung einer Verknüpfungen (8) zwischen dem ersten und zweiten Modellknoten (6,7) innerhalb des Diagnosemodells (5), die die physikalischen und/oder funktionalen Beziehung (4) zwischen der ersten und zweiten Automatisierungskomponente (1,2) modelliert,
- Erfassung eines ersten Zustandes der ersten Automatisierungskomponente (1) in einer ersten Statusinformation (9) des ersten Modellknotens (6) und eines zweiten Zustandes der zweiten Automatisierungskomponente (2) in einer zweiten Statusinformation (10) des zweiten Modellknotens (7) im Diagnosemodell (5) und
- Auswertung der ersten und/oder zweiten Statusinformation (9,10) zur Ermittlung einer Zustandsinformation für das Automatisierungssystem (3),
**dadurch gekennzeichnet, dass** das Diagnosemodell (5) automatisch bei einer mit einem Engineeringsystem (11) durchgeführten Projektierung des Automatisierungssystems (3) erzeugt wird,
wobei der erste und/oder zweite Modellknoten (6,7) eine elektronische Beschreibung der zugehörigen Automatisierungskomponente (1,2) umfasst, und
die einzelnen Automatisierungskomponenten (1, 2) in einer hierarchischen Ordnung zueinander angebracht sind und
die hierarchische Ordnung zwischen den Automatisierungskomponenten (1, 2) über die Verknüpfung zwischen den entsprechenden Modellknoten modelliert wird.

2. Diagnoseverfahren nach Anspruch 1,
wobei die elektronische Beschreibung eine Beschreibung möglicher Fehler der zugehörigen Automatisierungskomponente (1,2) umfasst.

3. Diagnoseverfahren nach einem der vorhergehenden Ansprüche, wobei die zweite Statusinformation (10) über die Verknüpfung von dem ersten Modellknoten (6) eingelesen wird.

4. Diagnoseverfahren nach einem der vorhergehenden Ansprüche, wobei innerhalb des ersten Modellknotens (6) eine Filterfunktion implementiert wird, mit der in Abhängigkeit der ersten und/oder zweiten Statusinformation (9,10) eine Alarmmeldung (12) generiert wird.

5. Diagnoseverfahren nach einem der vorhergehenden Ansprüche, wobei die erste Statusinformation (9) zur Anzeige einer Störung verwendet wird, wenn die zweite Statusinformation (10) eine Störung anzeigt, sofern die erste Automatisierungskomponente (1) der zweiten Automatisierungskomponente (2) funktional übergeordnet ist.

6. Diagnoseverfahren nach einem der vorhergehenden Ansprüche, wobei bei einer Alarmmeldung (12) zur Auffindung einer Störungsursache zunächst die erste Statusinformation (9) überprüft wird und nur im Falle einer Störungsanzeige der ersten Statusinformation (9) die zweite Statusinformation (10) überprüft wird.

7. Diagnoseverfahren nach einem der vorhergehenden Ansprüche, wobei das Diagnosemodell auf die erste und/oder die zweite Automatisierungskomponente (1,2) geladen und zur Laufzeit des Automatisierungssystems (3) aktiviert wird.

8. Engineeringsystem zur Projektierung eines Automatisierungssystems mit einer Eingabevorrichtung zur Definition einer physikalischen und/oder funktionalen Beziehung (4) zwischen einer ersten und einer zweiten Automatisierungskomponente (1,2), wobei der erste und/oder zweite Modellknoten (6,7) eine elektronische Beschreibung der zugehörigen Automatisierungskomponente (1,2) umfassen, und die einzelnen Automatisierungskomponenten (1, 2) in einer hierarchischen Ordnung zueinander angebracht sind und die hierarchische Ordnung zwischen den Automatisierungskomponenten (1, 2) über die Verknüpfung zwischen den entsprechenden Modellknoten modelliert wird, und einer Verarbeitungseinheit zur:
- Automatischen Erzeugung eines Diagnosemodells (5) während der Projektierung, bei dem der ersten Automatisierungskomponente (1) ein erster Modellknoten (6) und der zweiten Automatisierungskomponente (2) ein zweiter Modellknoten (7) zugeordnet sind,
- Automatischen Erzeugung einer Verknüpfungen (8) zwischen dem ersten und zweiten Modellknoten (6,7) innerhalb des Diagnosemodells (5), die die physikalischen und/oder funktionalen Beziehung (4) zwischen der ersten und zweiten Automatisierungskomponente (1,2) modelliert,
wobei das Diagnosemodell zur
- Erfassung eines ersten Zustandes der ersten Automatisierungskomponente (1) in einer ersten Statusinformation (9) des ersten Modellknotens (6) und eines zweiten Zustandes der zweiten Automatisierungskomponente (2) in einer zweiten Statusinformation (10) des zweiten Modellknotens (7) im Diagnosemodell (5) und zur
- Auswertung der ersten und/oder zweiten Statusinformation (9,10) zur Ermittlung einer Zustandsinformation für das Automatisierungssystem (3)
vorgesehen ist.

9. Engineeringsystem nach Anspruch 8,
wobei die Verarbeitungseinheit derartig ausgebildet ist, dass die elektronische Beschreibung eine Beschreibung möglicher Fehler der zugehörigen Automatisierungskomponente (1,2) umfasst.

10. Engineeringsystem nach einem der Ansprüche 8 oder 9, wobei die Verarbeitungseinheit zur Implementierung einer Filterfunktion innerhalb des ersten Modellknotens (6) vorgesehen ist, wobei die Filterfunktion zur Generierung einer Alarmmeldung (12) in Abhängigkeit der ersten und/oder zweiten Statusinformation (9,10) vorgesehen ist.

11. Engineeringsystem nach einem der Ansprüche 8 bis 10, wobei die Verarbeitungseinheit derartig ausgebildet ist, dass die erste Statusinformation (9) zur Anzeige einer Störung vorgesehen ist, wenn die zweite Statusinformation (10) eine Störung anzeigt, sofern die erste Automatisierungskomponente (1) der zweiten Automatisierungskomponente (2) funktional übergeordnet ist.

12. Engineeringsystem nach einem der Ansprüche 8 bis 11, wobei das Diagnosemodell auf die erste und/oder die zweite Automatisierungskomponente (1,2) ladbar und zur Laufzeit des Automatisierungssystems (3) auf der ersten und/oder zweiten Automatisierungskomponente (1,2) aktivierbar ist.

## Claims

1. Diagnostic method for an automation system (3) made up of at least a first and a second automation component (1,2), in which the automation components (1,2) are in a physical and/or functional relationship (4) to each other, with the following steps:
- Creation of a diagnostic model (5) in which a first model node (6) is assigned to the first automation component (1) and a second model node (7) is assigned to the second automation component (2),
- Creation of a link (8) between the first and second model nodes (6,7) within the diagnostic model (5) which models the physical and/or functional relationship (4) between the first and second automation components (1,2),
- Creation of a first status of the first automation component (1) in first status information (9) of the first model node (6) and of a second status of the second automation component (2) in second status information (10) of the second model node (7) in the diagnostic model (5) and
- Evaluation of the first and/or second status information (9,10) for determining status information for the automation system (3),
**characterised in that** the diagnostic model (5) is created automatically for project planning of the automation system (3) performed using an engineering system (11),
wherein the first and/or second model node (6,7) comprises an electronic description of the associated automation component (1,2), and,
the individual automation components (1,2) are attached to one another in a hierarchical order and the hierarchical order between the automation components (1,2) is modelled via the link between the corresponding model nodes.

2. Diagnostic method according to claim 1,
wherein the electronic description comprises a description of possible faults of the associated automation component (1,2).

3. Diagnostic method according to one of the previous claims, wherein the second status information (10) is read in via the link from the first model node (6).

4. Diagnostic method according to one of the previous claims, wherein a filter function is implemented within the first model node (6), with which, depending on the first and/or second status information (9,10), an alarm message (12) is generated.

5. Diagnostic method according to one of the previous claims, wherein the first status information (9) is used to display a fault if the second status information (10) displays a fault, provided the first automation component (1) is functionally above the second automation component (2) in the hierarchy.

6. Diagnostic method according to one of the previous claims, wherein, on an alarm message (12), to trace the cause of the fault, first the first status information (9) is checked and only in the case of a fault display of the first status information (9) is the second status information (10) checked.

7. Diagnostic method according to one of the previous claims, wherein the diagnostic model is loaded onto the first and/or the second automation component (1,2) and activated at run time of the automation system (3).

8. Engineering system for project planning of an automation system with an input device for definition of a physical and/or functional relationship (4) between a first and a second automation component (1,2), wherein the first and/or second model nodes (6,7) comprise an electronic description of the associated automation component (1,2), and the individual automation components (1,2) are attached to one another in a hierarchical order and the hierarchical order between the automation components (1,2) is modelled via the link between the corresponding model nodes, and a processing unit for:
- Automatic creation of a diagnostic model (5) during project planning, in which a first model node (6) is assigned to the first automation component (1) and a second model node (7) is assigned to the second automation component (2),
- Automatic creation of a linkage (8) between the first and second model node (6,7) within the diagnostic model (5) which models the physical and/or functional relationship (4) between the first and second automation components (1,2),
wherein the diagnostic model is provided for
- Recording a first status of the first automation component (1) in a first item of status information (9) of the first model node (6) and a second status of the second automation component (2) in a second item of status information (10) of the second model node (7) in the diagnostic model (5) and for
- Evaluation of the first and/or second items of status information (9,10) to determine status information for the automation system (3).

9. Engineering system according to claim 8,
wherein the processing unit is embodied such that the electronic description comprises a description of possible faults of the associated automation component (1,2).

10. Engineering system according to one of the claims 8 or 9, wherein the processing unit is provided for implementation of a filter function within the first model node (6), wherein the filter function is provided for generation of an alarm message (12) depending on the first and/or second status information (9,10).

11. Engineering system according to one of the claims 8 to 10, wherein the processing unit is embodied in such a way that the first status information (9) is provided for showing a fault if the second status information (10) shows a fault, provided the first automation component (1) is functionally above the second automation component (2) in the hierarchy.

12. Engineering system according to one of the claims 8 to 11, wherein the diagnostic model can be loaded onto the first and/or the second automation component (1,2) and can be activated at run time of the automation system (3) on the first and/or second automation component (1,2).

## Revendications

1. Procédé de diagnostic pour un système d'automatisation (3) composé d'au moins un premier et un deuxième composant d'automatisation (1, 2), dans lequel les composants d'automatisation (1, 2) sont en relation physique et/ou fonctionnelle (4) l'un avec l'autre, comportant les étapes suivantes :
- création d'un modèle de diagnostic (5) dans lequel un premier noeud de modèle (6) est associé au premier composant d'automatisation (1) et un deuxième noeud de modèle (7) est associé au deuxième composant d'automatisation (2),
- création d'une association (8) entre le premier et le deuxième noeud de modèle (6, 7) dans le modèle de diagnostic (5), laquelle modélise la relation physique et/ou fonctionnelle (4) entre le premier et le deuxième composant d'automatisation (1, 2),
- détection d'un premier état du premier composant d'automatisation (1) dans une première information de statut (9) du premier noeud de modèle (6) et d'un deuxième état du deuxième composant d'automatisation (2) dans une deuxième information de statut (10) du deuxième noeud de modèle (7) dans le modèle de diagnostic (5) et
- évaluation de la première et/ou de la deuxième information de statut (9, 10) pour déterminer une information d'état pour le système d'automatisation (3),
**caractérisé en ce que** le modèle de diagnostic (5) est créé automatiquement lors d'une conception de projet du système d'automatisation (3) réalisée avec un système d'ingénierie (11),
le premier et/ou le deuxième noeud de modèle (6, 7) incluant une description électronique du composant d'automatisation associé (1, 2) et
les différents composants d'automatisation (1, 2) étant agencés dans un ordre hiérarchique l'un par rapport à l'autre et l'ordre hiérarchique entre les composants d'automatisation (1, 2) étant modélisé par l'intermédiaire de l'association entre les noeuds de modèle correspondants.

2. Procédé de diagnostic selon la revendication 1, la description électronique incluant une description d'erreurs possibles du composant d'automatisation associé (1, 2).

3. Procédé de diagnostic selon l'une des revendications précédentes, la deuxième information de statut (10) étant lue par le premier noeud de modèle (6) par l'intermédiaire de l'association.

4. Procédé de diagnostic selon l'une des revendications précédentes, dans le premier noeud de modèle (6) étant implémentée une fonction de filtre par laquelle est généré un message d'alarme (12) en fonction de la première et/ou de la deuxième information de statut (9, 10).

5. Procédé de diagnostic selon l'une des revendications précédentes, la première information de statut (9) étant utilisée pour afficher une perturbation lorsque la deuxième information de statut (10) affiche une perturbation, dans la mesure où le premier composant d'automatisation (1) est fonctionnellement supérieur au deuxième composant d'automatisation (2).

6. Procédé de diagnostic selon l'une des revendications précédentes, la première information de statut (9) étant tout d'abord vérifiée en cas de message d'alarme (12) pour trouver une cause de perturbation et la deuxième information de statut (10) n'étant vérifiée qu'en cas d'affichage de perturbation de la première information de statut (9).

7. Procédé de diagnostic selon l'une des revendications précédentes, le modèle de diagnostic étant chargé sur le premier et/ou le deuxième composant d'automatisation (1, 2) et activé au moment où le système d'automatisation (3) tourne.

8. Système d'ingénierie pour la conception de projet d'un système d'automatisation avec un dispositif d'entrée pour la définition d'une relation physique et/ou fonctionnelle (4) entre un premier et un deuxième composant d'automatisation (1, 2), le premier et/ou le deuxième noeud de modèle (6, 7) incluant une description électronique du composant d'automatisation associé (1, 2) et les différents composants d'automatisation (1, 2) étant agencés dans un ordre hiérarchique l'un par rapport à l'autre et l'ordre hiérarchique entre les composants d'automatisation (1, 2) étant modélisé par l'intermédiaire de l'association entre les noeuds de modèle correspondants, et une unité de traitement pour :
- la création automatique d'un modèle de diagnostic (5) pendant la conception de projet, dans lequel un premier noeud de modèle (6) est associé au premier composant d'automatisation (1) et un deuxième noeud de modèle (7) est associé au deuxième composant d'automatisation (2),
- la création automatique d'une association (8) entre le premier et le deuxième noeud de modèle (6, 7) dans le modèle de diagnostic (5), laquelle modélise la relation physique et/ou fonctionnelle (4) entre le premier et le deuxième composant d'automatisation (1, 2),
le modèle de diagnostic étant prévu pour
- détecter un premier état du premier composant d'automatisation (1) dans une première information de statut (9) du premier noeud de modèle (6) et un deuxième état du deuxième composant d'automatisation (2) dans une deuxième information de statut (10) du deuxième noeud de modèle (7) dans le modèle de diagnostic (5) et
- évaluer la première et/ou la deuxième information de statut (9, 10) pour déterminer une information d'état pour le système d'automatisation (3).

9. Système d'ingénierie selon la revendication 8, l'unité de traitement étant réalisée de manière telle que la description électronique inclut une description d'erreurs possibles du composant d'automatisation associé (1, 2).

10. Système d'ingénierie selon l'une des revendications 8 ou 9, l'unité de traitement étant prévue pour implémenter une fonction de filtre dans le premier noeud de modèle (6), la fonction de filtre étant prévue pour générer un message d'alarme (12) en fonction de la première et/ou de la deuxième information de statut (9, 10).

11. Système d'ingénierie selon l'une des revendications 8 à 10, l'unité de traitement étant réalisée de manière telle que la première information de statut (9) est prévue pour afficher une perturbation lorsque la deuxième information de statut (10) affiche une perturbation, dans la mesure où le premier composant d'automatisation (1) est fonctionnellement supérieur au deuxième composant d'automatisation (2).

12. Système d'ingénierie selon l'une des revendications 8 à 11, le modèle de diagnostic pouvant être chargé sur le premier et/ou le deuxième composant d'automatisation (1, 2) et activé au moment où le système d'automatisation (3) tourne sur le premier et/ou le deuxième composant d'automatisation (1, 2).
